# EUROPÄISCHE PATENTANMELDUNG

(11) **EP 1 372 258 A2**
(43) Veröffentlichungstag der Anmeldung: **17.12.2003**
(21) Anmeldenummer: 03011487.0
(22) Anmeldetag: 21.05.2003
(51) Int. Cl.: H02P 7/00

(54) **Schaltungsanordnung zum Betreiben eines Gleichstrommotors und Verstelleinrichtung mit einer solchen**

(30) Priorität: 13.06.2002 DE 10226152
(71) Anmelder: DEERE & COMPANY, Moline, Illinois 61265-8098 (US)
(72) Erfinder: Tarasinksi, Nicolai, Dr., 67227 Frankenthal (DE); Fritz, Norbert, Dr., 68199 Mannheim (DE)
(74) Vertreter: Lau-Loskill, Philipp, Dipl.-Phys.

(57) **Zusammenfassung**

Es wird eine Schaltungsanordnung (10) zum Betreiben eines Gleichstrommotors (M) und eine Verstelleinrichtung (12) mit einer solchen beschrieben. Die Schaltungsanordnung (10) enthält Schaltmittel (T1, T2, T3, T4), welche die Anschlüsse (A1, A2) des Gleichstrommotors (M) mit einer Spannungsquelle (U) verbinden. Um eine Drehzahl- und Drehmomentbegrenzung zu ermöglichen, wird vorgeschlagen, den Gleichstrommotor (M) pulsweitenmoduliert zu betreiben, derart, dass der Gleichstrommotor (M) wechselweise in einer Versorgungsphase (VP) und in einer Kurzschlussphase (KP) betrieben wird, so dass sich Betriebszustände (Z1, Z2, Z3, Z4) einstellen können, in denen der Gleichstrommotor (M) wechselweise angetrieben und abgebremst wird. Durch Pulsweitenmodulation von Steuersignalen für die Schaltmittel (T1, T2, T3, T4) kann so die Drehzahlund das Drehmoment des Gleichstrommotors (M) begrenzt werden.

## Beschreibung

Die Erfindung betrifft eine Schaltungsanordnung zum Betreiben eines Gleichstrommotors und eine Verstelleinrichtung mit einer Schaltungsanordnung zum Betreiben eines Gleichstrommotors, mit Schaltmitteln, die Anschlüsse des Gleichstrommotors mit einer Spannungsquelle pulsweitenmoduliert verbinden.

Es ist bekannt, Verstelleinrichtungen zu automatisieren, indem z.B. Elektromotoren eingesetzt werden, um die Verstelleinrichtungen zu betätigen. Beispielsweise handelt es sich bei derartigen Verstelleinrichtungen um Schalteinrichtungen von Handschaltgetrieben, die durch den Einsatz von Elektromotoren automatisiert betätigt werden. Um eine Überlastung der Schalteinrichtung zu vermeiden, muss die Kraft beim Schalten begrenzt werden. Zur Begrenzung der Schaltkraft werden in derartigen Verstelleinrichtungen üblicherweise federnde Elemente in den Kraftfluss eingebracht, die einen Kraftüberschuss auffangen und/oder es werden z.B. Kraft- oder Positionssensoren eingesetzt, die eine Begrenzung des elektrischen Stroms des Elektromotors auslösen.

In der EP 0 638 743 A1 wird beispielsweise ein Verfahren und eine Vorrichtung zur Steuerung der Schaltkraft in einem automatisierten mechanischen Getriebe offenbart, wobei ein Elektromotor eingesetzt wird, der über eine Kontrolleinheit pulsweitenmoduliert angesteuert wird. Die Kontrolleinheit steuert bzw. regelt das Tastverhältnis (duty cycle) eines pulsweitenmodulierten (PWM) Spannungssignals das in Abhängigkeit vorgegebener Grenzwerte verändert bzw. angepasst wird. So wird z. B. der Strom während des Schaltvorgangs überwacht und mit einem zulässigen Zielstromwert verglichen, um große Stromschwankungen zu vermeiden. Die in der EP 0 638 743 A1 offenbarte Lösung ermöglicht es, eine Drehmomentbegrenzung und -überwachung eines die Schaltkraft aufbringenden Gleichstrommotors durchzuführen, um einer mechanischen Überlastung der Komponenten einer Schaltvorrichtung in einem automatisierten Getriebe vorzubeugen.

Das Verfahren gemäß der EP 0 638 743 A1 hat den Nachteil, dass eine Strommessung erforderlich ist, deren Signale in den Regelungsvorgang einfließen. Dadurch werden sowohl der Aufwand, als auch die Kosten und das Bauvolumen einer Vorrichtung deutlich erhöht.

Die EP 0 126 988 A1 offenbart eine Steuerschaltung zur Drehzahlregelung eines Gleichstrommotors, die einen Drehzahlregelbaustein enthält, der in Abhängigkeit von einem Drehzahlgeber, d.h. in Abhängigkeit von der Motordrehzahl, und einer vorgebbaren Solldrehzahl ein pulsweitenmoduliertes Steuersignal generiert, mit dem eine den Gleichstrommotor speisende Transistorschaltbrücke angesteuert wird. Dabei erzeugt der Drehzahlgeber ein der Drehzahl des Gleichstrommotors proportionales Signal. Dieses Signal wird zur Änderung des Tastverhältnisses eines pulsweitenmodulierten Steuersignals für die Transistorschaltbrücke des Gleichstrommotors herangezogen. Der Gleichstrommotor wird entsprechend des Tastverhältnisses des Steuersignals wechselweise mit einem positiven bzw. negativen Strom versorgt und dadurch wechselweise aktiv beschleunigt bzw. aktiv abgebremst. Durch das aktive Bremsen, d.h. durch das Laden des Gleichstrommotors mit einem der Drehbewegung entgegengesetzten Strom, soll auch bei niedrigen Drehzahlen eine gute Drehzahlregelung und andererseits ein rasches Abbremsen des Motors möglich sein. Die Transistorschaltbrücke ist dabei in bekannter Weise aufgebaut. Es werden vier Transistoren in Brückenschaltung zwischen den Anschlüssen einer Spannungsversorgung einerseits und dem Gleichstrommotor andererseits angeordnet. Durch Ansteuerung der Transistoren werden jeweils zwei der diametral gegenüberliegenden Transistoren der Brückenschaltung leitend bzw. nicht leitend geschaltet. Es ergeben sich somit zwei abwechselnd und gegensinnig mit dem Strom durchflossene Strompfade, die den Gleichstrommotor versorgen. Zur Ansteuerung dieser Stromkreise werden zwei Steuertransistoren verwendet, deren Kollektoren jeweils mit den Basen von zwei Transistoren der Brückenschaltung verbunden sind. An den Basen der Steuertransistoren liegt das vom Drehzahlregelbaustein generierte pulsweitenmodulierte Steuersignal an. Wird einer der beiden Steuertransistoren leitend geschaltet, so fließt Strom durch den Gleichstrommotor über einen der Stromzweige der Transistorschaltbrücke. Durch das pulsweitenmodulierte, wechselweise Schalten der Steuertransistoren wird der Motor abwechselnd in die eine und in die andere Drehrichtung angetrieben. Je nach Pulsweitenverhältnis kann der Antrieb des Gleichstrommotors in eine Drehrichtung überwiegen, wodurch die Drehzahl des Motors beeinflussbar wird.

Die in der EP 0 126 988 A1 offenbarte Lösung zur Drehzahlregelung eines Elektromotors geht von einer Schaltung mit zwei ansteuerbaren Stromkreisen aus, die zum Antrieb des Gleichstrommotors im Wechsel zueinander angesteuert werden. Nachteilig wirkt sich dabei aus, dass die dazu benötigte Drehzahlregelung aufwändig und kostspielig ist, zumal zusätzlich Komponenten wie z.B. ein Drehzahlgeber und eine logische Anordnung zur Signalverknüpfung benötigt werden.

Bei den beschriebenen Vorrichtungen bzw. Verfahren wird jeweils eine Betriebsgröße des Gleichstrommotors gesteuert bzw. beschränkt. Eine Begrenzung sowohl des Drehmomentes als auch der Drehzahl eines Gleichstrommotors ist mit den bekannten Vorrichtungen bzw. Verfahren nicht möglich.

Die der Erfindung zugrunde liegende Aufgabe wird darin gesehen, eine Schaltungsanordnung zum Betreiben eines Gleichstrommotors und eine Verstelleinrichtung mit einer Schaltungsanordnung zum Betreiben eines Gleichstrommotors der eingangs genannten Art anzugeben, durch welches die vorgenannten Probleme überwunden werden. Insbesondere soll die Schaltungsanordnung derart ausgebildet werden, dass eine vorgebbare Nenndrehzahl und ein vorgebbares Drehmoment des Gleichstrommotors nicht überschritten wird. Dabei sollen keine Sensoren oder Einrichtungen zur Weg-/Drehzahl- oder Kraftmessung bzw. zur Strombegrenzung des Gleichstrommotors erforderlich sein. Andererseits soll die Verstellung, insbesondere des Schaltvorgangs, so schnell wie irgend möglich vorgenommen werden können, ohne dass es durch überhöhte Geschwindigkeiten beim Erreichen von Endanschlägen zu Beschädigungen kommt. Des Weiteren soll es die Schaltungsanordnung ermöglichen, auf eine Kraftbegrenzung durch zusätzliche federnde Elemente in der Verstelleinrichtung zu verzichten. Der Erfindung liegt weiter die Aufgabe zugrunde, durch die Schaltungsanordnung die Verstellzeiten der Verstelleinrichtung zu minimieren bzw. die Betätigungsgeschwindigkeit der Verstelleinrichtung im Rahmen der Belastbarkeit der mechanischen Elemente der Verstelleinrichtung zu optimieren.
Die Aufgabe wird erfindungsgemäß durch die Lehre des Patentanspruchs 1 bzw. 7 gelöst. Weitere vorteilhafte Ausgestaltungen und Weiterbildungen der Erfindung gehen aus den Unteransprüchen hervor.

Erfindungsgemäß wird eine Schaltungsanordnung vorgeschlagen, in der Schaltmittel vorgesehen sind, die derart angeordnet und geschaltet werden, dass die Anschlüsse eines Gleichstrommotors innerhalb eines Schaltzyklus abwechselnd einerseits in einer Versorgungsphase mit einer Spannungsquelle verbunden und andererseits in einer Kurzschlussphase kurzgeschlossen werden, wobei sich durch die abwechselnden Versorgungs- und Kurzschlussphasen Betriebszustände einstellen können, in denen der Motor alternierend angetrieben und abgebremst wird. Insbesondere wird durch ein pulsweitenmoduliertes Steuersignal zur Ansteuerung der Schaltmittel der Gleichstrommotor wechselweise beschleunigt und abgebremst, so dass ein Gleichgewichtszustand erzielt wird, in dem sich eine vorgebbare Nenndrehzahl zum einen, zum anderen ein vorgebbares Drehmoment einstellt. In der Versorgungsphase wird der Gleichstrommotor von einer Spannungsquelle angetrieben. Es folgt die Kurzschlussphase, die zunächst bewirkt, dass Strom in gleicher Richtung durch den Gleichstrommotor fließt, jedoch der Stromfluss abnimmt. Dabei wird der Gleichstrommotor weiterhin angetrieben. Wird der Punkt erreicht, an dem die elektromotorische Kraft des Gleichstrommotors überwiegt, kommt es zu einer Stromumkehr und der Gleichstrommotor wirkt als Generator. In dieser Phase wird der Gleichstrommotor infolge des Kurzschlussstroms stark abgebremst. Wird nun wieder in die Versorgungsphase geschaltet, fließt der Strom durch den Gleichstrommotor zunächst weiter in gleicher Richtung und wird zurück zur Spannungsquelle geleitet, d. h. es erfolgt eine kurzzeitige Stromrückspeisung. Das heißt, durch Umschalten von der Kurzschlussphase in die Versorgungsphase kann ein Teil der im System enthaltenen kinetischen mechanischen Energie in elektrische Energie zurückgewandelt und in die Spannungsquelle gespeist werden.

Durch Variation des Tastverhältnisses (duty cycle) des pulsweitenmodulierten Steuersignals können sowohl die Nenndrehzahl bzw. eine maximale Drehzahl als auch das maximale Drehmoment des Gleichstrommotors gezielt vorgegeben werden, ohne das eine aufwändige Sensorik zur Bestimmung von Betriebsgrößen (wie z.B. Motordrehzahl oder Motorstrom) herangezogen werden muss. Abhängig von dem Verhältnis der Länge der Versorgungsphase zur Länge der Kurzschlussphase innerhalb eines Schaltzyklus lassen sich Nenndrehzahlen und Drehmomente einstellen.

In einer vorteilhaften Ausbildung der Erfindung wird der Gleichstrommotor in einem Zeitintervall zwischen der Versorgungsphase und der Kurzschlussphase in einer offenen Phase betrieben, derart dass die Schaltmittel der Schaltungsanordnung des Gleichstrommotors gleichzeitig nicht leitend geschaltet sind. Dies ist vorgesehen, um Spannungsspitzen zu vermeiden, die durch undiskrete Schaltvorgänge von der Versorgungsphase in die Kurzschlussphase entstehen können. Durch das Einbringen einer offenen Phase in den Schaltzyklus können Überschneidungen ungewollter Schaltzustände vermieden werden.

In einer erfindungsgemäßen Ausbildung der Schaltungsanordnung werden vorzugsweise, elektrische oder elektronische Schaltmittel verwendet, wie Relais oder Halbleiterbausteine. Als Halbleiterbausteine kommen z.B. Transistoren, MOSFETs oder IGBTs in Betracht, denen gegebenenfalls weitere Halbleiterbausteine wie z.B. Dioden parallelgeschaltet sind. Insbesondere für das erfindungsgemäße Betreiben des Gleichstrommotors, mit einer durch pulsweitenmoduliertem Steuersignal erzeugten Schaltfrequenz von vorzugsweise 500 Hz, ist der Einsatz von Halbleiterbausteinen von Vorteil bzw. notwendig.

In einer besonders vorteilhaften Ausbildung der Erfindung zum Betreiben des Gleichstrommotors in einer ersten Drehrichtung, sind in der Schaltungsanordnung wenigstens zwei gleichsinnig in Serie geschaltete Transistoren mit jeweils gegenläufig parallelgeschalteten Dioden enthalten. Die Schaltungsanordnung ist hierbei wie folgt aufgebaut: Ein erster Anschluss der Spannungsquelle steht mit einem ersten Anschluss des Gleichstrommotors über einen ersten in Richtung des Gleichstrommotors durchlässigen Transistor schaltbar in Verbindung. Ein zweiter Anschluss des Gleichstrommotors ist mit einem zweiten Anschluss der Spannungsquelle verbunden. Der erste Anschluss des Gleichstrommotors steht des Weiteren über einen zweiten in Richtung des zweiten Anschlusses der Spannungsquelle durchlässigen Transistor mit dem zweiten Anschluss des Gleichstrommotors schaltbar in Verbindung.

Diese Schaltungsanordnung ermöglicht es, durch pulsweitenmodulierte Ansteuerung der beiden Transistoren den Gleichstrommotor alternierend in einer Versorgungsphase, nämlich wenn der erste Transistor leitend und der zweite Transistor nicht leitend geschaltet ist, und in einer Kurzschlussphase, nämlich wenn der erste Transistor nicht leitend und der zweite Transistor leitend geschaltet ist, zu betreiben. Durch vorgebbare Pulsweitenverhältnisse der Steuersignale für die Transistoren stellen sich entsprechende Betriebszustände im Gleichstrommotor ein, in denen der Gleichstrommotor alternierend abgebremst und angetrieben wird, wodurch sich ein Gleichgewichtszustand einstellt, in dem eine vorgebbare Nenndrehzahl nicht überschritten wird.

Diese Ausbildung der Erfindung unterscheidet sich wesentlich vom Stand der Technik. Bei der EP 0 126 988 A1 wird eine Brückentransistorschaltung verwendet, in der jeweils zwei diametral gegenüberliegende Transistoren gleichsinnig geschaltet werden, wodurch zwei Strompfade abwechselnd geöffnet bzw. geschlossen werden, so dass der Stromfluss durch den Gleichstrommotor alternierend in positiver und in negativer Richtung erfolgt und der Motor durch den Strom abwechselnd angetrieben und abgebremst wird. Bei der vorliegenden Erfindung ist hingegen lediglich ein Strompfad mit zwei Transistoren erforderlich. Der Gleichstrommotor wird alternierend mit der Spannungsquelle verbunden und in einen Kurzschlusskreis geschaltet. Die erfindungsgemäße Schaltungsanordnung enthält wenige Bauteile und hat einen einfachen Aufbau. Bei ihr kann vollständig auf den Einsatz von Sensoren verzichtet werden.

In einer weiteren besonders vorteilhaften Ausbildung zum Betreiben des Gleichstrommotors in beide Drehrichtungen werden wenigstens vier Transistoren mit jeweils gegenläufig parallelgeschalteten Dioden in einer Schaltung angeordnet. Hierbei steht ein erster Anschluss der Spannungsquelle mit einem ersten bzw. einem zweiten Anschluss des Gleichstrommotors über einen ersten bzw. einen zweiten Transistor schaltbar in Verbindung. Des Weiteren steht der erste bzw. der zweite Anschluss des Gleichstrommotors mit dem zweiten Anschluss der Spannungsquelle über einen dritten bzw. einen vierten Transistor schaltbar in Verbindung, wobei alle Transistoren bezüglich der Spannungsquelle die gleiche Durchlassrichtung aufweisen. Eine derartige Schaltungsanordnung entspricht einer Brückenschaltung von Transistoren bzw. Dioden. Auch diese erfindungsgemäße Brückenschaltung unterscheidet sich erheblich vom Stand der Technik, wie er in der EP 0 126 988 A1 beschrieben wurde, denn erfindungsgemäß wird für eine Drehrichtung lediglich das Transistorenpaar eines Strompfades wechselweise umgeschaltet, während hierbei das Transistorenpaar des anderen Strompfades nicht geschaltet wird, sondern für die andere Drehrichtung zur Verfügung steht.

Des Weiteren besitzt die erfindungsgemäße Schaltungsanordnung den Vorteil, dass die Phasen, in denen der Gleichstrommotor abgebremst wird, sich desto weniger auswirken, je langsamer der Gleichstrommotor läuft. Dadurch kann eine vorgebbare Nenndrehzahl aus dem Stillstand sehr schnell erreicht werden. Andererseits tritt eine durch die Kurzschlussphase hervorgerufene Bremswirkung nur ein, wenn der Gleichstrommotor sich dreht. Die Bremswirkung ist umso stärker, je schneller sich der Gleichstrommotor dreht. Wenn sich der Gleichstrommotor frei ohne nennenswerte Drehmomentbelastung drehen kann, dann beschleunigt er in der Versorgungsphase und wird in der Kurzschlussphase etwa gleichstark wieder abgebremst. Dabei stellt sich ein Gleichgewicht aus Antreiben und Bremsen ein.

In einer bevorzugten Ausführung der Schaltungsanordnung sind die ansteuerbaren Schaltmittel (z.B. Transistoren) beim Betreiben des Gleichstrommotors über die Zeit mit variablen Pulsweitenverhältnissen ansteuerbar. Dadurch kann während eines Schaltvorgangs gezielt auf die vorherrschenden Betriebsbedingungen eingegangen werden. So kann beispielsweise zum Beschleunigen von Massen ein hohes Pulsweitenverhältnis gewählt werden, um eine rasche Beschleunigung mit hohem Drehmoment zu erreichen. Im weiteren Verlauf kann dann zum Halten einer gewünschten Nenndrehzahl das Pulsweitenverhältnis wieder herabgesetzt werden. Durch entsprechend geringe Pulsweitenverhältnisse können selbst mit leistungsstarken Gleichstrommotoren geringe Drehmomente oder Haltekräfte kontrolliert aufgebracht werden. Durch Variation des Pulsweitenverhältnisses über die Zeit wird es ermöglicht, die Ansteuerung des Gleichstrommotors während eines Schaltvorgangs individuell an die vorherrschenden Bedingungen anzupassen und hinsichtlich der Dauer eines Schaltvorgangs zu optimieren.

Die erfindungsgemäße Schaltungsanordnung eignet sich unter anderem für den Einsatz in Verstelleinrichtungen, bei denen ein Gleichstrommotor zur Automatisierung des Verstellvorganges eingesetzt wird. Die erfindungsgemäße Schaltungsanordnung eignet sich insbesondere für elektromotorunterstützte Verstelleinrichtungen mit begrenzten Verstellwegen bzw. für Verstelleinrichtungen, bei denen ein Verstellweg durch Anschläge oder dergleichen begrenzt ist.

Um derartige Verstelleinrichtungen handelt es sich bei Verstelleinrichtungen halbautomatisierter Schaltgetriebe, bei denen der Verstellweg durch eine Synchronisiereinrichtung des Schaltgetriebes begrenzt ist und die Schalteinrichtung während eines Synchronisiervorgangs gegen einen Anschlag bzw. gegen Synchronisierringe fährt. Um einen raschen Schaltvorgang zu erreichen, werden hierbei vergleichsweise leistungsstarke Schaltmotoren eingesetzt. Bei Erreichen des Anschlages müssen die durch den Elektromotor aufgebrachten Schaltkräfte begrenzt werden, damit einzelne Komponenten der Verstelleinrichtung und der Synchronisiereinrichtung nicht beschädigt werden. Aus Kostengründen und um derartige Baugruppen möglichst klein zu halten ist es sinnvoll, zusätzliche Sensoren zur Schaltkraftbegrenzung oder kraftaufnehmende federnde Zusatzelemente zu vermeiden. Durch Einsatz einer erfindungsgemäßen Schaltungsanordnung für einen Gleichstrommotor einer Verstelleinrichtung eines automatisierten Schaltgetriebes ist eine Schaltkraftbegrenzung durch pulsweitenmodulierte Ansteuerung der Schaltungsanordnung möglich.

Wird beispielsweise die Drehbewegung des Gleichstrommotors behindert, weil die Synchronisiereinrichtung zur Anlage gekommen ist, baut sich in der Versorgungsphase eine Kraft auf, die in der Kurzschlussphase nicht oder nur wenig abgebaut wird, da bei Stillstand des Gleichstrommotors in der Kurzschlussphase dem System aktiv keine Energie entzogen wird. Durch geeignete Wahl des Pulsweitenverhältnisses mit dem die Schaltungsanordnung angesteuert wird, können Frequenz und Zeitdauer von Versorgungs- und Kurzschlussphase gesteuert werden und damit Schaltkräfte in der Schalteinrichtung begrenzt werden.

Anhand der Zeichnung, die ein Ausführungsbeispiel der erfindungsgemäßen Schaltungsanordnung und ein Ausführungsbeispiel der erfindungsgemäßen Verstelleinrichtung mit einer Schaltungsanordnung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das Schaltbild einer erfindungsgemäßen Schaltungsanordnung für einen Gleichstrommotor,
- Fig. 2: ein schematisches Schaltimpulsdiagramm mit korrespondierenden Strom- und Spannungssignalen des Gleichstrommotors,
- Fig. 3: eine schematische Darstellung einer erfindungsgemäßen Verstelleinrichtung für ein Schaltgetriebe und
- Fig. 4: ein Zeitdiagramm einer bevorzugten Variation eines Pulsweitenverhältnisses eines Steuersignals während eines Schaltvorgangs in einem automatisierten Schaltgetriebe.

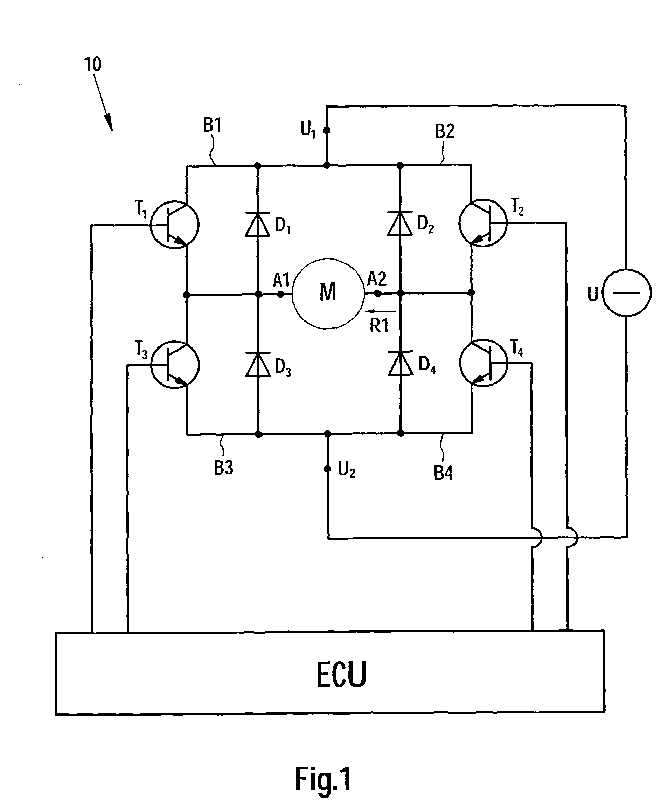

Aus Fig. 1 geht eine Schaltungsanordnung hervor, mit der ein Gleichstrommotor M in beide Drehrichtungen betrieben werden kann. Der Gleichstrommotor M besitzt zwei Anschlüsse A1 und A2.

Zwischen den beiden Anschlüssen U1, U2 einer Spannungsquelle U sind zwei Transistoren T1, T3 in Reihe in einem ersten Strang und parallel hierzu sind zwei Transistoren T2, T4 in Reihe in einem zweiten Strang angeordnet. Alle vier Transistoren sind gleichsinnig gepolt und bilden eine Brückenschaltung, bei der die Anschlüsse A1, A2 des Gleichstrommotors M leitend, mit jeweils einem Mittelabgriff zwischen den Transistoren T1 und T3 bzw. zwischen den Transistoren T2 und T4, verbunden sind. Zu den Transistoren T1 bis T4 sind vier Dioden D1 bis D4 parallel angeordnet, wobei die Dioden D1 bis D4 zu den Transistoren T1 bis T4 entgegengerichtet gepolt sind. Der Transistor T1 sowie die Diode D1 befinden sich gemäß Fig. 1 in einem oberen linken Brückenzweig B1, der Transistor T2 und die Diode D2 in einem oberen rechten Brückenzweig B2, der Transistor T3 und die Diode D3 in einem unteren linken Brückenzweig B3 und der Transistor T4 und die Diode D4 in einem unteren rechten Brückenzweig B4. Die Transistoren T1, T2, T3, T4 verhalten sich wie Schalter, die leitend sind, wenn ein hohes Potential, und die nicht leitend sind, wenn ein tiefes Potential durch eine Steuereinrichtung (ECU) an die Basis des jeweiligen Transistors T1, T2, T3, T4 angelegt wird.

Für den Betrieb des Gleichstrommotors M in eine Drehrichtung ergeben sich Schaltzustände, die in eine Versorgungsphase und in eine Kurzschlussphase des Gleichstrommotors resultieren. Für eine erste Drehrichtung des Gleichstrommotors M werden die Transistoren T1 und T3 pulsweitenmoduliert wechselweise geschaltet, wobei der Transistor T2 dauerhaft nicht leitend und der Transistor T4 dauerhaft leitend geschaltet ist. Für die zweite Drehrichtung werden die Transistoren T2 und T4 pulsweitenmoduliert wechselweise geschaltet und dabei der Transistor T1 dauerhaft nicht leitend und der Transistor T3 dauerhaft leitend geschaltet. Es werden also je nach Drehrichtung immer nur die Transistoren eines Stranges der Brückenschaltung (Längs-Brückenzweig) gegensinnig pulsweitenmoduliert angesteuert. Dabei ist zu beachten, dass die beiden Transistoren eines Stranges (T1 und T3 bzw. T2 und T4) nie gleichzeitig leitend geschaltet werden, da dies zu einem Kurzschluss der Spannungsquelle führen würde.

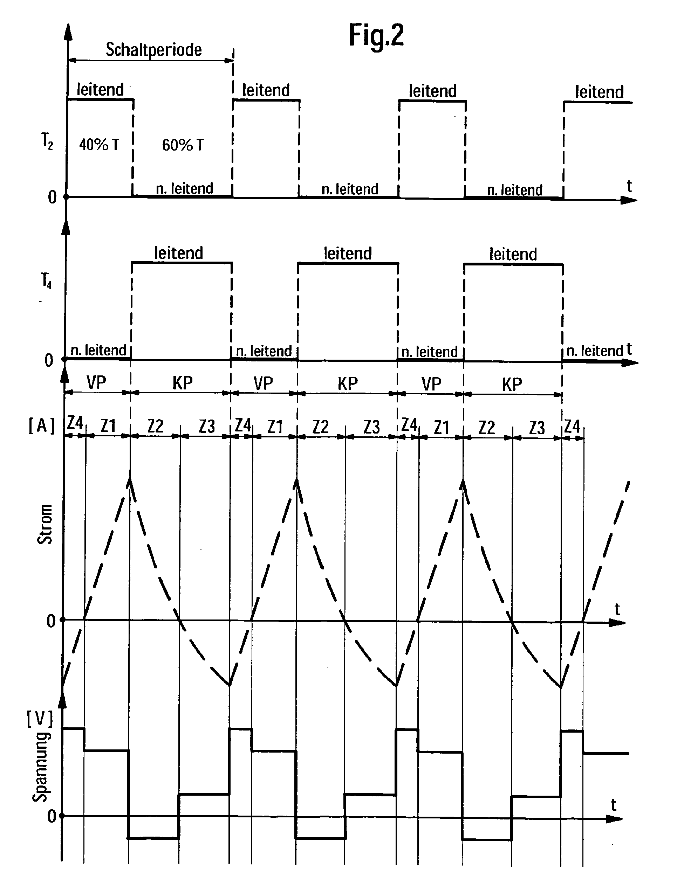

Für eine ausgewählte Drehrichtung ergeben sich durch pulsweitenmodulierte Ansteuerung der Transistoren eines Stranges der Brückenschaltung die in Fig. 2 dargestellten Zustände Z1 bis Z4, welche einer Versorgungsphase VP und einer Kurzschlussphase KP des Gleichstrommotors M zugeordnet werden.

In der Fig. 2 sind die Steuersignale für die pulsweitenmodulierte Ansteuerung der Transistoren T2 und T4 mit einem Pulsweitenverhältnis von 40% sowie die Strom- und Ankerspannungssignale des Gleichstrommotors M dargestellt. Ebenfalls eingetragen sind sowohl die Versorgungs- und Kurzschlussphasen VP und KP als auch die Zustände Z1 bis Z4. Die Versorgungsphase VP umfasst die Zustände Z1 und Z4, in denen die Transistoren T2 leitend und der Transistor T4 nicht leitend geschaltet ist. Die Kurzschlussphase KP umfasst die Zustände Z2 und Z3, in denen der Transistoren T2 nicht leitend und der Transistor T4 leitend geschaltet ist. Jede Schaltperiode T enthält somit eine Versorgungsphase VP und eine Kurzschlussphase KP.

Der Zustand Z1 stellt sich ein, wenn der Transistor T2 leitend und der Transistor T4 nicht leitend geschaltet sind. Es fließt ein Strom vom Anschluss U1 über den oberen rechten Brückenzweig B2 in Richtung R1 durch den Gleichstrommotor M und über den unteren linken Brückenzweig B3 zum Anschluss U2. Dieser Strom erzeugt ein positives Luftspaltmoment und treibt den Gleichstrommotor an. Im Zustand Z1 nimmt der Strom rasch zu (Fig. 2) und beschleunigt den Gleichstrommotor M.

Durch die Umschaltung der Transistoren T2 und T4 stellt sich der Zustand Z2 ein, in welchem der Transistor T2 nicht leitend und der Transistor T4 leitend geschaltet ist, so dass der Gleichstrommotor M in der Kurzschlussphase KP betrieben wird, d.h. die Anschlüsse A1, A2 des Gleichstrommotors M sind kurzgeschlossen. Aufgrund seines Trägheitsmoments dreht sich der Gleichstrommotor M weiter und infolge der Ankerinduktion fließt der Strom weiter in dieselbe Richtung R1 gegen die in den Motorwindungen induzierte Gegenspannung über den unteren linken Brückenzweig B3 durch den leitend geschalteten Transistor T3 und über den unteren rechten Brückenzweig durch die Diode D4 zum Anschluss A2. Dem Stromfluss wirkt die in den Motorwindungen induzierte Spannung entgegen, so dass der Strom rasch abnimmt. Die Umschaltung des Transistors T4 kann etwas später erfolgen als die Umschaltung des Transistors T2, da der Kurzschlussstrom zunächst durch die Diode D4 fließt.

Die elektromotorische Kraft bewirkt eine Umkehr der Stromrichtung. Sobald der Strom die Nulllinie unterschreitet und in die Gegenrichtung fließt, beginnt der Zustand Z3. Der Strom fließt nun über den unteren rechten Brückenzweig B4 durch den leitend geschalteten Transistor T4 über den unteren linken Brückenzweig B3 durch die Diode D3 zum Anschluss A1. Der Gleichstrommotor M wirkt hierbei als Generator. Wie die Stromund Spannungssignalverläufe in Fig. 2 zeigen, ist der Strom negativ und es kommt erneut zu einem Spannungssprung. In diesem Zustand erzeugt der Strom ein Bremsmoment im Gleichstrommotor M.

Durch erneutes Ansteuern der Transistoren T2 und T4 wird wieder in die Versorgungsphase VP geschaltet. Der Transistor T2 wird leitend und der Transistor T4 wird nicht leitend geschaltet. Es stellt sich Zustand Z4 ein. Der Gleichstrommotor M wirkt weiter als Generator. Da der Kurzschlusskreis des Zustandes Z3 durch den nicht leitenden Transistor T4 unterbrochen ist, fließt der Strom jetzt in negativer Richtung ausgehend vom Anschluss U2 über den unteren linken Brückenzweig B3 durch die Diode D3 über den Gleichstrommotor M und über den oberen rechten Brückenzweig B2 durch die Diode D2 zum Anschluss U1 der Spannungsquelle U. Er erzeugt dabei ein negatives Drehmoment und speist Leistung zurück in die Spannungsquelle U. Dies wird möglich, da die induzierte Spannung positiv und die Gesamtankerspannung größer als die Spannung der Spannungsquelle wird. Die Umschaltung des Transistors T2 kann etwas später erfolgen als die Umschaltung des Transistors T4, da der Kurzschlussstrom durch die Diode D2 fließt.

Wie dem Stromsignalverlauf aus Fig. 2 zu entnehmen ist, nimmt der Strom im Zustand Z4 betragsmäßig ab, bis eine Richtungsumkehr des Stromes in Richtung R1 erfolgt. Dem Spannungssignalverlauf aus Fig. 2 ist zu entnehmen, dass zu Beginn des Zustands Z4 das Spannungsniveau auf ein Maximum ansteigt, wodurch die Rückspeisung durch den Gleichstrommotor M verdeutlicht wird. Ab dem Zeitpunkt der Richtungsumkehr des Stromes in Richtung R1 tritt erneut Zustand Z1 ein, in dem der Gleichstrommotor M wieder aktiv beschleunigt wird.

In Analogie zu den oben beschriebenen Schaltzuständen der Transistoren T1 und T3 und zu der Ansteuerung der Transistoren T2 und T4 wird für eine entgegengesetzte Drehrichtung des Gleichstrommotors M der Transistor T2 dauerhaft auf leitend und der Transistor T4 dauerhaft auf nicht leitend geschaltet. Die Transistoren T1 und T3 werden pulsweitenmoduliert angesteuert.

In Abhängigkeit von einem Pulsweitenverhältnis P der Steuersignale für die Transistoren T2 und T4 bzw. T1 und T3 kann die Dauer der einzelnen Zustände Z1 bis Z4 und damit die Länge der Versorgungs- und Kurzschlussphase VP bzw. KP variiert bzw. eingestellt werden. Es hat sich gezeigt, dass durch Wahl eines relativ hohen Pulsweitenverhältnisses P der Gleichstrommotor M derart betrieben werden kann, dass während der Versorgungs- und Kurzschlussphase VP bzw. KP lediglich die Zustände Z1 und Z2 eintreten. In diesem Fall wird der Gleichstrommotor M überwiegend beschleunigt und nur wenig abgebremst, wodurch eine hohe Nenndrehzahl und ein hohes Drehmoment erreicht werden kann. Bei relativ kleinem Pulsweitenverhältnis P können zusätzlich die Zustände Z3 und Z4 auftreten, was zu einer stärkeren Abbremsung des Gleichstrommotors M und somit zu einer Abnahme der Nenndrehzahl und des Drehmomentes führt.

Durch eine Variation der Pulsweitenmodulation des Steuersignals und durch eine angepasste Schaltperiodendauer T bzw. einer Schaltperiodenfrequenz lassen sich mit der erfindungsgemäßen Schaltungsanordnung die Drehzahl und das wirksame Drehmoment auf vorgebbare Werte begrenzen, und zwar auch dann, wenn ein relativ leistungsstarker Gleichstrommotor verwendet wird, der die Verstellelemente stark beschleunigt, um kurze Verstellzeiten zu ermöglichen. Damit können Verstellzeiten einer Verstelleinrichtung minimiert bzw. Betätigungsgeschwindigkeiten der Verstelleinrichtung im Rahmen der Belastbarkeit der mechanischen Elemente der Verstelleinrichtung optimiert werden. Für die Anwendung einer erfindungsgemäßen Schaltanordnung in einem automatisierten Schaltgetriebe ist eine Schaltperiodenfrequenz von vorzugsweise 500 Hz zur Ansteuerung der Transistoren praktikabel.

Die erfindungsgemäße Schaltungsanordnung eignet sich vorzugsweise für Schaltvorgänge in Verstelleinrichtungen mit kurzen Schaltzeiten, da es bei einem langandauernden Betriebsintervall des Gleichstrommotors, insbesondere in der Kurzschlussphase, zu Überhitzungen kommen kann. Bei automatisierten Schaltgetrieben sind nur kurze Schaltzeiten und somit auch nur kurze Betriebsintervalle zu erwarten, womit eine Überhitzung des Gleichstrommotors unwahrscheinlich ist.

Im Folgenden wird ein Ausführungsbeispiel einer Verstelleinrichtung mit einer erfindungsgemäßen Schaltungsanordnung für den Betrieb eines Gleichstrommotors beschrieben. Hierbei ermöglicht ein Einsatz der erfindungsgemäßen Schaltungsanordnung einen Verzicht auf Sensoren und federnde Elemente zur Kraftbegrenzung.

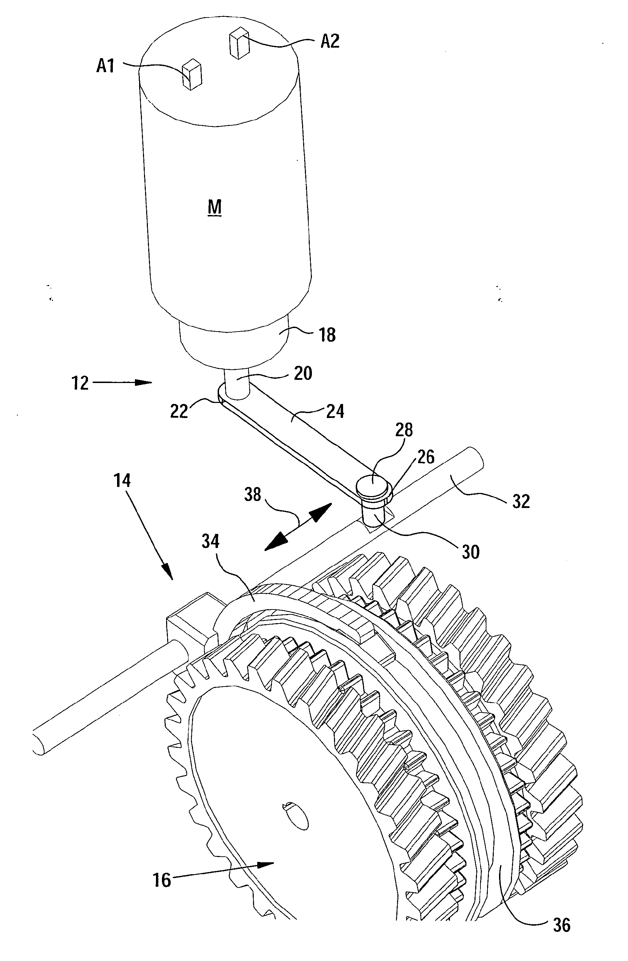

In Fig. 3 ist eine Verstelleinrichtung 12 für die Schalteinrichtung 14 einer Synchronisiereinrichtung 16 eines nicht näher gezeigten automatisierten Handschaltgetriebes schematisch dargestellt.

Die Verstelleinrichtung 12 enthält einen Gleichstrommotor M mit einem Untersetzungsgetriebe 18 und einer Ausgangswelle 20. Der Gleichstrommotor M besitzt zwei Anschlüsse A1, A2, die mit der erfindungsgemäßen Schaltungsanordnung 10 (Fig. 1) elektrisch verbunden sind. Die Ausgangswelle 20 ist drehfest mit dem einen Ende 22 eines Hebels 24 verbunden. Mittels eines Verstellstiftes 28 am zweiten Ende 26 des Hebels 24 steht der Hebel 24 mit einer Verstellnut 30 der Schalteinrichtung 14 in Eingriff.

Die Schalteinrichtung 14 enthält eine Schaltstange 32, die mit einer Schaltgabel 34 fest verbunden ist. Auf der Schaltstange 32 ist die Verstellnut 30 eingebracht, in die der Verstellstift 28 eingreift. Die Schaltgabel 34 greift in eine Schaltmuffe 36 der Synchronisiereinrichtung 16 des Handschaltgetriebes ein.

Der Aufbau einer oben genannten Synchronisiereinrichtung 16 basiert vorzugsweise auf dem System _{"}Borg-Warner" und finden in Fahrzeuggetrieben eine breite Anwendung. Eine ausführliche Beschreibung des Aufbaus und der Wirkungsweise einer derartigen Synchronisiereinrichtung 16 bzw. einer Synchronisierung liefern beispielsweise G. Lechner und H. Naunheimer in "Fahrzeuggetriebe", Springer-Verlag Berlin Heidelberg New York, 1994, Seiten 238 - 241.

Durch Ansteuerung der erfindungsgemäßen Schaltungsanordnung 10 aus Fig. 1 wird der Gleichstrommotor M aktiviert. Das Untersetzungsgetriebe 18 liefert ein Drehmoment, das über die Ausgangswelle 20 am Hebel 24 angreift. Aufgrund der Drehbewegung der Ausgangswelle 20 führt das zweite Ende 26 des Hebels 24 eine Schwenkbewegung aus. Die Schwenkbewegung wird über den Verstellstift 28 und die Verstellnut 30 auf die Schaltstange 32 übertragen, derart, dass die Schaltstange 32 eine translatorische Verstellbewegung ausführt und entsprechend der Richtungen des Doppelpfeils 38 bewegt wird. Je nach Drehrichtung des Gleichstrommotors M bewegt sich die Schaltstange 32 in die eine oder andere Richtung des Doppelpfeils 38. Über die Schaltgabel 34, die fest mit der Schaltstange 32 verbunden ist und in die Schaltmuffe 36 eingreift, wird die Verstellbewegung auf die Schaltmuffe 36 übertragen. In Abhängigkeit von der Verstellbewegung der Schaltmuffe 36 werden Synchronisiervorgänge in der Synchronisiereinrichtung 16 zum Schalten von Getriebestufen ausgelöst.

Dabei ist es zweckmäßig, während eines Schaltvorgangs, die Verstellbewegung bezüglich Verstellkraft und Verstellgeschwindigkeit zu variieren, da ein Synchronisiervorgang mehrere Synchronisierabschnitte enthält, die eine unterschiedliche Optimierung der Verstellbewegung in Hinblick auf Verstellkraft und Verstellgeschwindigkeit erfordern. Die Ansteuerung des Gleichstrommotors M mit der erfindungsgemäßen Schaltungsanordnung 10 unter Variation des Pulsweitenverhältnisses P ermöglicht eine derartige Optimierung der Verstellbewegung.

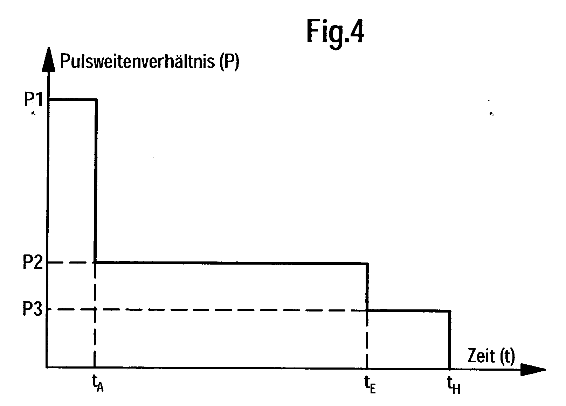

Das in Fig. 4 dargestellte Zeitdiagramm beschreibt qualitativ eine für den Synchronisiervorgang bevorzugte Variation des Pulsweitenverhältnisses P. So wird während eines Schaltvorgangs zu Beginn ein hohes konstantes Pulsweitenverhältnis P1 gewählt, wodurch hohe Beschleunigungskräfte erzielt und die statischen Reibungskräfte der Schaltmuffe 36 überwunden werden können. Während eines Synchronisiervorgangs sind vorgegebene Synchronisierkräfte einzuhalten, um eine Beschädigung der Bauteile in der Synchronisiervorrichtung zu vermeiden. Daher wird, nach einer vorgebbaren Beschleunigungszeit t_{A,} das Pulsweitenverhältnis P1 auf ein kleineres konstantes Pulsweitenverhältnis P2 heruntergesetzt. Dadurch wird auch vermieden, dass die Verstellgeschwindigkeit bei Erreichen einer Endposition der Schaltmuffe 36 zu hoch ist, was in der Synchronisiereinrichtung 16 zu mechanischen Schäden führen kann. Nach Beendigung des eigentlichen Synchronisiervorgangs zu einem Zeitpunkt t_{E} sind nur noch geringe Verstellkräfte notwendig, die die Schaltmuffe 36 in der Endposition festhalten, um sicherzustellen, dass eine geschaltete Zahnradstufe in Eingriff gehalten wird, bis der Schaltvorgang mit einem Einkuppeln einer Kupplung zu einem Zeitpunkt t_{H} abgeschlossen ist. Während dieser Zeit ist es zweckmäßig, eine Stützkraft an der Schaltmuffe 36 beizubehalten und das Pulsweitenverhältnis P auf einen vorgebbaren Wert P3 zu halten.

Durch entsprechende Variation der Pulsweitenverhältnisse (P1, P2, P3) während eines Schaltvorgangs können somit Verstellzeiten minimiert bzw. die Verstellgeschwindigkeit im Rahmen der Belastbarkeit der mechanischen Elemente der Verstelleinrichtung 12, der Schalteinrichtung 14 und der Synchronisiereinrichtung 16 optimiert werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Schaltungsanordnung zum Betreiben eines Gleichstrommotors (M), mit Schaltmitteln (T1, T2, T3, T4), welche die Anschlüsse (A1, A2) des Gleichstrommotors (M) mit einer Spannungsquelle (U) pulsweitenmoduliert verbinden, **dadurch gekennzeichnet, dass** die Schaltmittel (T1 T2, T3, T4) derart angeordnet und schaltbar sind, dass die Anschlüsse (A1, A2) innerhalb einer Schaltperiode (T) abwechselnd einerseits in einer Versorgungsphase (VP) mit der Spannungsquelle (U) verbunden und andererseits in einer Kurzschlussphase (KP) kurzgeschlossen werden, wobei sich durch die abwechselnden Versorgungs- und Kurzschlussphasen (VP, KP) Betriebszustände (Z1, Z2, Z3, Z4) einstellen können, in denen der Motor (M) alternierend angetrieben und abgebremst wird.

2. Schaltungsanordnung nach Anspruch 1, **dadurch gekennzeichnet, dass** der Gleichstrommotor (M) in einem Zeitintervall zwischen der Versorgungsphase (VP) und der Kurzschlussphase (KP) in einer offenen Phase betrieben wird, derart dass die Schaltmittel (T1, T2, T3, T4) der Schaltungsanordnung (10) gleichzeitig nicht leitend geschaltet werden.

3. Schaltungsanordnung nach Anspruch 1 oder 2, **dadurch gekennzeichnet, dass** elektrische oder elektronische Schaltmittel (T1, T2, T3, T4) verwendet werden, wie Relais oder Halbleiterbausteine, wie z.B. Transistoren, MOSFETs oder IGBTs, denen gegebenenfalls weitere Halbleiterbausteine wie z.B. Dioden (D1, D2, D3, D4) parallelgeschaltet sind.

4. Schaltungsanordnung nach einem der vorhergehenden Ansprüche, **dadurch gekennzeichnet, dass** zum Betreiben des Gleichstrommotors (M) wenigstens zwei Transistoren (T1, T3) mit jeweils gegenläufig parallelgeschalteten Dioden (D1, D3) enthalten sind, derart, dass ein erster Anschluss (U1) der Spannungsquelle (U) mit einem ersten Anschluss (A1) des Gleichstrommotors (M) über einen ersten in Richtung des Gleichstrommotors (M) durchlässigen Transistor (T1) schaltbar in Verbindung steht, ein zweiter Anschluss (A2) des Gleichstrommotors (M) mit einem zweiten Anschluss (U2) der Spannungsquelle (U) verbunden ist und der erste Anschluss (A1) des Gleichstrommotors (M) über einen zweiten in Richtung des zweiten Anschlusses (U2) der Spannungsquelle (U) durchlässigen Transistor (T3) mit dem zweiten Anschluss (A2) des Gleichstrommotors (M) schaltbar in Verbindung steht.

5. Schaltungsanordnung nach einem der vorhergehenden Ansprüche, **dadurch gekennzeichnet, dass** zum Betreiben des Gleichstrommotors (M) wenigstens vier Transistoren (T1, T2, T3, T4) mit jeweils gegenläufig parallelgeschalteten Dioden (D1, D2, D3, D4) enthalten sind, derart, dass ein erster Anschluss (U1 der Spannungsquelle (U) mit einem ersten bzw. einem zweiten Anschluss (A1, A2) des Gleichstrommotors (M) über einen ersten bzw. einen zweiten Transistor (T1, T2) schaltbar in Verbindung steht und der erste bzw. der zweite Anschluss (A1, A2) des Gleichstrommotors (M) mit dem zweiten Anschluss (U2) der Spannungsquelle (U) über einen dritten bzw. einen vierten Transistor (T3, T4) schaltbar in Verbindung steht, wobei die Transistoren (T1, T2, T3, T4) bezüglich der Spannungsquelle (U) die gleiche Durchlassrichtung aufweisen.

6. Schaltungsanordnung nach einem der vorhergehenden Ansprüche, **dadurch gekennzeichnet, dass** die Schaltmittel (T1, T2, T3, T4) beim Betreiben des Gleichstrommotors (M) über die Zeit mit variablen Pulsweitenverhältnissen ansteuerbar sind.

7. Verstelleinrichtung mit einem durch einen Gleichstrommotor (M) angetriebenen Verstellmechanismus und mit einer Schaltungsanordnung (10) für den Betrieb eines Gleichstrommotors (M), **dadurch gekennzeichnet, dass** die Schaltungsanordnung (10) nach einem der vorhergehenden Ansprüche ausgebildet ist.

8. Verstelleinrichtung nach Anspruch 7, **gekennzeichnet durch** einen begrenzten Verstellweg.

9. Verstelleinrichtung für eine Schalteinrichtung (14) eines automatisierten Handschaltgetriebes nach Anspruch 8, **dadurch gekennzeichnet, dass** der Verstellweg durch eine Synchronisiereinrichtung (16) der Schalteinrichtung (14) begrenzt ist.
